# EUROPÄISCHE PATENTSCHRIFT

(11) **EP 2 909 123 B1**
(45) Veröffentlichungstag und Bekanntmachung des Hinweises auf die Patenterteilung: **14.12.2016**
(21) Anmeldenummer: 13782681.4
(22) Anmeldetag: 21.10.2013
(51) Int. Cl.: B66B 7/06, B66B 7/12

(54) **ÜBERWACHUNG VON TRAGMITTELN IN AUFZUGSANLAGEN**
MONITORING OF LOAD-BEARING DEVICES IN LIFT SYSTEMS
SURVEILLANCE DE MOYENS DE SUPPORT DANS DES INSTALLATIONS DÝASCENSEUR

(30) Priorität: 22.10.2012 EP 12189370
(43) Veröffentlichungstag der Anmeldung: 26.08.2015
(73) Patentinhaber: Inventio AG, 6052 Hergiswil (CH)
(72) Erfinder: DOLD, Florian, CH-6037 Root (CH); ZAPF, Volker, CH-6012 Obernau (CH); NEUMANN-HENNEBERG, Wolf, 78604 Rietheim-Weilheim (DE)
(86) Internationale Anmeldenummer: PCT/EP2013/071911
(87) Internationale Veröffentlichungsnummer: WO 2014/064022

(56) Entgegenhaltungen:
- WO-A1-2010/057797
- WO-A1-2011/003791

## Beschreibung

Gegenstand der Erfindung ist eine Überwachung von Tragmitteln in Aufzugsanlagen, insbesondere ein zur Überwachung geeignetes Tragmittel sowie eine Aufzugsanlage mit einem solchen Tragmittel, sowie ein Verfahren zur Überwachung eines Tragmittels.

Bei manchen Fördereinrichtungen wie beispielsweise Aufzugsanlagen, Kranen oder Hebezügen, werden riemenförmige Tragmittel eingesetzt. Diese Tragmittel umfassen im Allgemeinen mehrere aus Strahldrähten bestehende Zugträger, welche die von dem Tragmittel aufzunehmenden Zugkräfte aufnehmen. Die Zugträger sind im Allgemeinen von einem Mantel aus Kunststoff umgeben. Der Mantel schützt die Zugträger beispielsweise vor mechanischem Verschleiss, da die Tragmittel häufig über Umlenkstellen geführt werden. Zudem verbessert der Mantel die Traktion des Tragmittels auf Umlenk- oder Antriebsrollen, und fixiert die Anordnung der Zugträger untereinander.

Solche Tragmittel sind innerhalb einer Fördereinrichtung ein sicherheitsrelevantes Bauteil. Ihr Versagen, bzw. Bruch kann zu einem Herabfallen des zu fördernden Gutes führen. Dies kann zu erheblichen Sach- bzw. Personenschäden führen. Aus diesem Grund werden Prüfeinheiten in Fördereinrichtungen eingesetzt, welche insbesondere den mechanischen Zustand der Zugträger überprüfen. Schäden an den die Kräfte aufnehmenden Zugträgern sollen dadurch frühzeitig erkannt werden können, so dass das Tragmittel bei einer Beschädigung ausgewechselt werden kann, um ein Versagen der Fördereinrichtung zu verhindern.

Die elektrisch leitenden, metallischen Zugträger sind von dem elektrisch isolierenden Mantel aus Kunststoff umgeben. Zur Durchführung einer Prüfung des Zustandes der Zugträger ist bei einigen Verfahren eine Kontaktierung eines Kontaktelementes mit dem Zugträger erforderlich. Bei einem bekannten Verfahren wird mit Hilfe des Kontaktelementes durch die Zugträger ein elektrischer Strom geleitet, der als Prüfstrom dazu dient, den Zustand der Zugträger festzustellen.

Die DE 3 934 654 A1 zeigt ein gattungsbildendes Tragmittel. Die Enden der Zugträger sind dabei paarweise leitend mit einem Brückenteil verbunden, so dass die Zugträger des Tragmittels elektrisch in Reihe geschaltet sind. Die Zugträger des Tragmittels sind über ein Amperemeter an eine Spannungsquelle angeschlossen, so dass mittels des Prüfstromes, der durch sämtliche Zugträger aufgrund der elektrischen Schaltung in Reihe geleitet wird, der Zustand der Zugträger beurteilt werden kann.

Die WO 2005/094249 A2 zeigt ein System zur Kontaktierung eines Tragmittels, bei dem die Kontaktelemente senkrecht zu einer Längsachse der Zugträger den Mantel des Tragmittels durchstossen und dann in die Zugträger eindringen. Nachteiligerweise können dabei die Kontaktelemente aufgrund des erforderlichen Durchstossvorganges durch den Mantel die Zugträger verfehlen. Zudem kann sich ein Übergangswiderstand zwischen den Zugträgern und den darin eingedrungenen Kontaktelementen über die Zeit verändern, was sich nachteilig auf eine Aussagekraft eines Überwachungsverfahrens auswirkt.

Die WO2010/057797A1 und die WO2011/003791A1 zeigen Systeme zur Kontaktierung eines Tragmittels, bei dem Kontaktelemente auf freigelegte Zugträger des Tragmittels gebracht werden, beispielsweise durch federnde Kontakte oder durch in die Zugträger eindringende Kontaktspitzen. Nachteilig an solchen Kontaktierungssystemen ist es, dass die Verbindung zwischen Kontaktelementen und Zugträgern unbeständig ist und dass ein hoher Übergangswiderstand zwischen dem Kontaktelement und den Zugträgern vorliegt.

Eine Aufgabe der vorliegenden Erfindung besteht darin, ein Tragmittel zur Verfügung zu stellen, welches in einer Aufzugsanlage überwacht werden kann, wobei die Zugträger des Tragmittels zuverlässig elektrisch kontaktiert sein sollen, und wobei ein niedriger und konstanter Übergangswiderstand zwischen den Zugträgern und einer Überwachungseinrichtung vorliegen soll. Eine weitere Aufgabe der vorliegenden Erfindung ist es, ein Verfahren zur Überwachung eines Zustandes von Zugträgern in einem Tragmittel bereitzustellen, bei welchem die Zugträger zuverlässig elektrisch kontaktiert werden können, und bei welchem ein niedriger und konstanter Übergangswiderstand zwischen den Zugträgern und einer Überwachungseinheit vorliegt. Zudem soll das Verfahren ein einfaches Verbinden des Tragmittels mit der Überwachungseinrichtung erlauben.

Zur Lösung dieser Aufgabe wird ein Tragmittel für Aufzugsanlagen vorgeschlagen, welches mehrere parallel zueinander angeordnete Zugträger und einen Mantel aufweist. Dabei sind die Zugträger vom Mantel umhüllt, und die Zugträger erstrecken sich entlang einer Längsachse des Tragmittels. Auf einem Abschnitt der Längsachse des Tragmittels liegen die Zugträger zumindest teilweise vom Mantel frei. Auf diesem Abschnitt sind an den Zugträgern Kontaktelemente zur elektrischen Kontaktierung der Zugträger permanent befestigt.

Ein solches Tragmittel hat den Vorteil, dass die Zugträger bereits Kontaktelemente zur elektrischen Kontaktierung der Zugträger aufweisen, so dass beim Einbau des Tragmittels in einer Aufzugsanlage die Kontaktelemente lediglich an eine Überwachungseinrichtung angeschlossen werden müssen. Somit ist es nicht mehr notwendig, dass die Zugträger beim Einbau des Tragmittels in die Aufzugsanlage elektrisch kontaktiert werden, wie dies im Stand der Technik der Fall ist. Dies vereinfacht die Montage eines Überwachungssystemes für Tragmittel in Aufzugsanlagen wesentlich. Zudem wird durch die an den Zugträgern befestigten Kontaktelemente sichergestellt, dass eine stabile elektrische Verbindung zu den Zugträgern hergestellt werden kann, und dass ein geringer und konstanter Übergangswiderstand von den Zugträgern zur Überwachungseinrichtung gewährleistet werden kann. Ein niedriger und konstanter Übergangswiderstand erlaubt eine zuverlässige Überwachung der Zugträger über deren gesamte Einsatzdauer in einer Aufzugsanlage.

In einem vorteilhaften Ausführungsbeispiel liegen die Zugträger auf dem Abschnitt der Längsachse des Tragmittels vollständig vom Mantel frei. Dies hat den Vorteil, dass die Kontaktelemente besser an den Zugträgern befestigt werden können.

In einem vorteilhaften Ausführungsbeispiel beträgt der Abschnitt 5 bis 100 mm, bevorzugt 5 bis 50 mm, und besonders bevorzugt 5 bis 25 mm. Eine solche Dimensionierung des Abschnittes erlaubt eine versetzte Anordnung der Kontaktelemente und ist dennoch so bemessen, dass die Zugträger des Tragmittels nicht unnötigerweise auf einem längeren Abschnitt frei liegen. Wird der Abschnitt zu gross gewählt, besteht zudem die Gefahr, dass die Zugträger auf dem Abschnitt verbogen werden, was zu unerwünschten Berührungen benachbarter Zugträger untereinander führen kann.

In einem vorteilhaften Ausführungsbeispiel ist der Abschnitt nahe einem Ende des Tragmittels angeordnet, sodass auf beiden Seiten des Abschnittes Tragmittelbereiche mit ummantelten Zugträgern an den Abschnitt angrenzen. Eine solche Anordnung des Abschnittes hat den Vorteil, dass die Zugträger auf beiden Seiten des Abschnittes durch den Mantel in ihrer vorgesehenen Position gehalten werden. Dadurch wird verhindert, dass sich die Zugträger auf dem Abschnitt zu stark verbiegen und elektrische Brücken zwischen den Zugträgern entstehen.

In einem alternativen Ausführungsbeispiel ist der Abschnitt direkt an einem Ende des Tragmittels angeordnet, sodass nur auf einer Seite des Abschnittes ein Tragmittelbereich mit ummantelten Zugträgern an den Abschnitt angrenzt. Eine solche Anordnung des Abschnittes hat den Vorteil, dass die Entmantelung des Abschnittes einfacher vorgenommen werden kann. Beispielsweise kann der Mantel an einem vorgesehenen Ort unterbrochen und dann von den Zugträgern abgezogen werden.

Die Kontaktelemente sind permanent mit den Zugträgern verbunden. Dies hat den Vorteil, dass die Kontaktelemente bei der Lagerung, beim Transport, und beim Einbau des Tragmittels nicht verloren gehen. Unter einer permanenten Verbindung wird in diesem Zusammenhang eine Verbindung verstanden, welche sich nicht ohne grösseren Aufwand auflösen lässt. In die Zugträger eindringende Kontaktelemente bilden demnach keine permanente Verbindung, weil sie ohne grösseren Aufwand aus den Zugträgern herausgezogen werden können. An die Zugträger geschweisste Kontaktelemente bilden demnach eine permanente Verbindung, weil verschweisste Teile durch den Stoffschluss nicht ohne grösseren Aufwand voneinander getrennt werden können.

In einem vorteilhaften Ausführungsbeispiel umgreifen die Kontaktelemente die Zugträger zumindest teilweise. Dies hat den Vorteil, dass durch ein solches Umgreifen eine grössere Kontaktfläche und dadurch eine sicherere elektrische Verbindung zwischen Kontaktelement und Zugträger hergestellt wird, und dass zudem ein niedrigerer Übergangswiderstand zwischen Zugträger und Kontaktelement erreicht werden kann.

In einer vorteilhaften Ausführungsform sind die Kontaktelemente auf die Zugträger gelötet, geschweisst, geklebt, oder durch eine mechanische Einwirkung bleibend verformt und dadurch an den Zugträgern befestigt. Dies hat wiederum den Vorteil, dass die Kontaktelemente sicher mit den Zugträgern verbunden bleiben, wodurch eine stabile elektrische Verbindung mit einem niedrigen und konstanten Übergangswiderstand gewährleistet werden kann.

In einem vorteilhaften Ausführungsbeispiel ragen die Kontaktelemente im Wesentlichen senkrecht zur Längsachse des Tragmittels weg. In einer vorteilhaften Weiterbildung ragen die Kontaktelemente zudem im Wesentlichen senkrecht zu einer Traktionsseite des Tragmittels weg. Dies hat den Vorteil, dass so von den Zugträgern wegragende Kontaktelemente einfach zugänglich sind und beispielsweise an einen auf das Tragmittel aufgebrachten Stecker angeschlossen werden können.

In einem alternativen Ausführungsbeispiel, in welchem der Abschnitt direkt an einem Ende des Tragmittels angeordnet ist, ragen die Kontaktelemente im Wesentlichen in Richtung der Zugträger weg. Eine solche Anordnung der Kontaktelemente hat den Vorteil, dass die Kontaktelemente in einer Verlängerung des Tragmittels abgegriffen werden können. Je nach Platzverhältnissen in der Aufzugsanlage kann dies ein Vorteil gegenüber einer radialen Kontaktierungsweise darstellen.

In einer vorteilhaften Ausführungsform liegt der Abschnitt in einem Bereich des Tragmittels, welcher in einem Verwendungszustand in einer Aufzugsanlage nicht mit einem Kabinengewicht oder einem Gegengewicht belastet ist. Dadurch wird sichergestellt, dass tragende Bereiche des Tragmittels vollständig vom Mantel umhüllt sind und dadurch weniger anfällig auf Beschädigung sind.

In einer vorteilhaften Ausführungsform ist ein erster Abschnitt in einer Nähe eines ersten Endes des Tragmittels angeordnet, und ein zweiter Abschnitt ist in einer Nähe eines zweiten Endes des Tragmittels angeordnet. Das Vorsehen von je einem Abschnitt mit Kontaktelementen an beiden Enden des Tragmittels hat den Vorteil, dass die Zugträger auf einer gesamten Länge des Tragmittels überwacht werden können.

In einem vorteilhaften Ausführungsbeispiel ist an jedem Zugträger des Tragmittels ein Kontaktelement angeordnet. Dies hat den Vorteil, dass jeder Zugträger des Tragmittels überwacht werden kann, was eine Sicherheit der Aufzugsanlage erhöht.

In einem vorteilhaften Ausführungsbeispiel sind benachbarte Kontaktelemente in Bezug zur Längsachse des Tragmittels versetzt zueinander angeordnet. Dabei können die

Kontaktelemente beispielsweise in zwei Reihen angeordnet sein, so dass die Kontaktelemente von einer Seite des Tragmittels zur anderen Seite des Tragmittels hin jeweils abwechslungsweise in einer ersten und in einer zweiten Reihe angeordnet sind. Eine solche versetzte Anordnung der Kontaktelemente hat den Vorteil, dass ein elektrischer Kontakt zwischen zwei benachbarten Zugträgern vermieden werden kann. Dies ist insbesondere bei Tragmitteln mit nahe beieinander liegenden Zugträgern von Vorteil. Zudem entsteht durch eine versetzte Anordnung der Kontaktelemente mehr Raum zum Abgreifen der Kontaktelemente.

In einem vorteilhaften Ausführungsbeispiel ist über die Zugträger auf dem Abschnitt ein Abdeckelement angeordnet, so dass im Wesentlichen nur Stellen der Zugträger vom Abdeckelement frei liegen, an welchen die Kontaktelemente angeordnet sind. Ein solches Abdeckelement kann beispielsweise aus einem Polyamid, vorzugsweise aus einem faserverstärkten Polyamid ausgebildet sein. In einer alternativen Ausführungsform ist das Abdeckelement aus einem thermoplastischen Polyurethan gebildet, vorzugsweise aus einem faserverstärkten thermoplastischen Polyurethan.
Ein solches Abdeckelement hat den Vorteil, dass die Zugträger auch auf dem entmantelten Abschnitt vor Umwelteinflüssen geschützt sind, wenn das Tragmittel in einer Aufzugsanlage verwendet wird. Ein solches Abdeckelement ist zudem ein Schutz für die Kontaktelemente während eines Transportes des Tragmittels und während eines Einbaus des Tragmittels in die Aufzugsanlage. So werden die Kontaktelemente beispielsweise bei einem Einschlaufen des Tragmittels durch eine Tragmittelendverbindung vor ungewolltem Abknicken bzw. Abdrücken geschützt.

Das hier beschriebene Tragmittel wird in einem bevorzugten Ausführungsbeispiel in einer Aufzugsanlage mit einem Antrieb und einer Kabine eingesetzt. Dabei ist der Abschnitt mit den Kontaktelementen derart angeordnet, dass er in einem Bereich des Tragmittels zu liegen kommt, welcher nicht von einem Kabinengewicht belastet ist. Das hier beschriebene Tragmittel ist grundsätzlich in verschiedenen Arten von Aufzügen einsetzbar. So sind beispielsweise Aufzüge mit oder ohne Gegengewicht denkbar, sowie verschiedene Umhängesysteme der Kabine beziehungsweise des Gegengewichtes. Das hier beschriebene Tragmittel kann somit in Aufzugsanlagen, in welchen die Kabine 2:1 aufgehängt ist, wie auch in Aufzugsanlagen, in welchen die Kabine und das Gegengewicht 1:1 aufgehängt sind, wie auch in andersartig gestalteten Aufzugsanlagen eingesetzt werden.

In einem vorteilhaften Ausführungsbeispiel sind die Kontaktelemente elektrisch mit einer Überwachungseinheit einer Aufzugsanlage verbunden. Eine solche Überwachungseinrichtung kann beispielsweise einen elektrischen Widerstand der einzelnen Zugträger überprüfen.

In einem vorteilhaften Ausführungsbeispiel sind die Kontaktelemente aus einer verzinkten Metallplatte gebildet. In einer vorteilhaften Weiterbildung ist diese Metallplatte so gebogen, dass zwei Schenkel entstehen, welche in einem Verwendungszustand die Zugträger umklammern.
In einer alternativen Ausführungsform sind die Kontaktelemente aus einer verzinnten oder aus einer nicht-rostenden Metallplatte gebildet.

Zur Lösung der eingangs gestellten Aufgabe wird zudem ein Verfahren zur Überwachung eines Zustandes von Zugträgern in einem Tragmittel vorgeschlagen, wobei das Tragmittel mehrere parallel zueinander angeordnete Zugträger umfasst. Zudem weist das Tragmittel einen Mantel auf, wobei die Zugträger vom Mantel umhüllt sind. Das Verfahren umfasst folgende Schritte: zumindest teilweises Freilegen der Zugträger auf einem Abschnitt des Tragmittels; permanentes Befestigen von Kontaktelementen an den Zugträgern auf dem freigelegten Abschnitt des Tragmittels zur elektrischen Kontaktierung der Zugträger; Einbauen des Tragmittels in eine Aufzugsanlage; Verbinden der Kontaktelemente mit einer Überwachungseinheit; und Bestimmen einer elektrischen Kenngrösse der Zugträger zur Überwachung des Zustandes der Zugträger.

Ein solches Verfahren hat den Vorteil, dass das Befestigen der Kontaktelemente an den Zugträgern vor dem Einbauen des Tragmittels in die Aufzugsanlage erfolgen kann. Somit kann das Tragmittel mit den Kontaktelementen vorkonfektioniert werden, was eine Montage eines Überwachungssystemes in der Aufzugsanlage stark vereinfacht. Zudem können solche werkseitig befestigten Kontaktelemente eine sicherere elektrische Verbindung zu den Zugträgern herstellen, sowie einen niedrigeren und konstanteren Übergangswiderstand zwischen Kontaktelementen und Zugträgern gewährleisten.

In einem vorteilhaften Ausführungsbeispiel wird beim Freilegen der Zugträger der Mantel auf dem Abschnitt gebürstet und / oder wasserstrahlgeschnitten. In einer vorteilhaften Weiterbildung wird der Mantel auf dem Abschnitt zunächst gebürstet, dann wasserstrahlgeschnitten, und dann nochmals gebürstet. Ein solches Freilegungsverfahren gewährleistet sauber vom Mantel freigelegte Zugträger, an welche eine sichere und mit einem kleinen Übergangswiderstand charakterisierte elektrische Verbindung angebracht werden kann. Zudem kann der Abschnitt mit einem solchen Freilegungsverfahren durch bürsten bzw. wasserstrahlschneiden mit einer hier geforderten Toleranz freigelegt werden.

In einem alternativen Ausführungsbeispiel wird beim Freilegen der Zugträger der Mantel auf dem Abschnitt durch thermische Einwirkung geschmolzen.

In einem weiteren alternativen Ausführungsbeispiel wird beim Freilegen der Zugträger der Mantel auf dem Abschnitt mit einem Laser entfernt.

In einem weiteren alternativen Ausführungsbeispiel wird der Mantel an einer vorgesehenen Stelle geschnitten, und dann von den Zugträgern abgezogen. Dabei kann der Mantel vollständig von den Zugträgern abgezogen werden, wodurch der freigelegte Abschnitt direkt am Ende des Tragmittels zu liegen kommt, oder der Mantel kann nicht vollständig von den Zugträgern abgezogen werden, wodurch der teilweise abgezogene Mantel am Ende übersteht, sodass der freigelegte Abschnitt nicht direkt am Ende des Tragmittels zu liegen kommt.

In einem vorteilhaften Ausführungsbeispiel werden die Kontaktelemente an die Zugträger geschweisst, gelötet, geklebt oder durch eine mechanische Einwirkung bleibend verformt und dadurch an die Zugträger befestigt. Derart befestigte Kontaktelemente stellen eine sichere elektrische Verbindung mit einem niedrigen und konstanten Übergangswiderstand zwischen den Zugträgern und den Kontaktelementen dar.
In einem vorteilhaften Ausführungsbeispiel wird vor oder nach dem Befestigen der Kontaktelemente an den Zugträgern ein Abdeckelement über den Zugträgern angeordnet, so dass im Wesentlichen nur Stellen der Zugträger vom Abdeckelement freiliegen, an welchen die Kontaktelemente angeordnet sind. Ein solches Abdeckelement schützt die Kontaktelemente vor Umwelteinflüssen während eines Betriebs in einer Aufzugsanlage und bei einem Transport sowie einem Einbau des Tragmittels in eine Aufzugsanlage.

In einem vorteilhaften Ausführungsbeispiel liegt durch das Einbauen des Tragmittels in der Aufzugsanlage der Abschnitt mit den Kontaktelementen an einem nicht von einem Kabinengewicht oder einem Gegengewicht belasteten Bereich. Dadurch wird verhindert, dass das Tragmittel in einem tragenden Bereich unnötig geschwächt wird. Zudem können dadurch Vibrationen des Tragmittels, welche sich nachteilig auf die elektrische Verbindung auswirken würden, weitgehend ausgeschlossen werden.

Zum elektrischen Abgreifen eines hier beschriebenen Tragmittels mit Kontaktelementen wird zudem ein Stecker mit eine Sockel und einem Deckel vorgeschlagen.

In einem vorteilhaften Ausführungsbeispiel werden die Kontaktelemente durch Verbindungselemente im Stecker elektrisch abgegriffen. Bei einer Befestigung des Steckers am Tragmittel bzw. an den Kontaktelementen wird zunächst das Tragmittel mit den Kontaktelementen in den Sockel gelegt. Dabei ist das Tragmittel sowohl in Richtung der Zugträger als auch quer zur Richtung der Zugträger in engen Grenzen beweglich im Sockel gelagert. Wird nun der Deckel mit den Verbindungselementen auf dem Sockel befestigt, so richtet sich das Tragmittel entsprechend im Sockel aus, während dessen die Verbindungselemente mit den Kontaktelementen in vorgesehener Art und Weise in Kontakt treten. Nachdem das Tragmittel im Sockel entsprechend ausgerichtet ist und die Verbindungselemente in vorgesehener Art und Weise mit den Kontaktelementen in Kontakt stehen, werden Deckel und Sockel aneinander befestigt. Durch das Befestigen des Deckels am Sockel werden die Verbindungselemente in Bezug zu den Kontaktelementen in ihrer vorgesehenen Position gehalten. Durch einen solchen Stecker können die Kontaktelemente zuverlässig und in einem geschützten Rahmen elektrisch abgegriffen werden.

In einem vorteilhaften Ausführungsbeispiel sind die Verbindungselemente derart ausgebildet, dass die Verbindungselemente die Kontaktelemente an vier oder mehr Punkten kontaktieren, wenn die Verbindungselemente in vorgesehener Art und Weise mit den Kontaktelementen in Kontakt stehen. Dies hat den Vorteil, dass durch eine höhere Anzahl Kontaktpunkte zwischen den Kontaktelementen und den Verbindungselementen ein niedrigerer Übergangswiderstand erreicht werden kann.

Einzelheiten und Vorteile der Erfindung werden in folgenden anhand von Ausführungsbeispielen und mit Bezug auf schematische Zeichnungen beschrieben. Es zeigen:
- Figur 1: eine beispielhafte Ausführungsform einer Aufzugsanlage;
- Figur 2: eine beispielhafte Ausführungsform eines Tragmittels mit einem freigelegten Abschnitt;
- Figur 3: eine beispielhafte Ausführungsform eines Tragmittels mit einem freigelegten Abschnitt, wobei Kontaktelemente an Zugträgern angeordnet sind;
- Figur 4: eine beispielhafte Ausführungsform eines Kontaktelementes;
- Figur 5: eine beispielhafte Ausführungsform eines Tragmittels mit einer Abdeckung;
- Figur 6: eine beispielhafte Ausführungsform eines Tragmittels mit Kontaktelementen und mit einem Sockel eines Steckers;
- Figur 7: eine beispielhafte Ausführungsform eines Tragmittels mit Kontaktelementen und mit einem Deckel eines Steckers; und
- Figur 8: eine beispielhafte Ausführungsform eines Tragmittels mit Kontaktelementen und mit einem daran angeordneten Stecker.

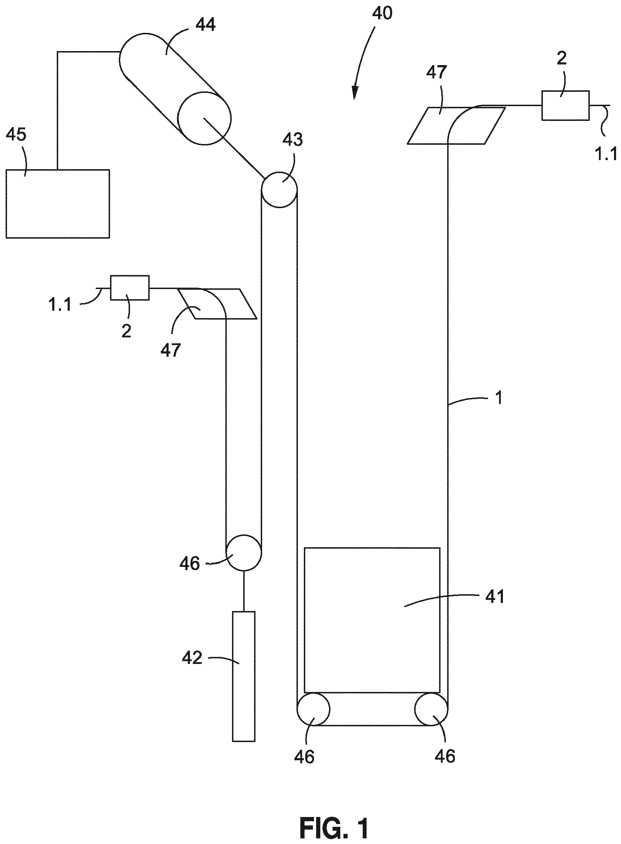

Die in Figur 1 schematisch und beispielhaft dargestellte Aufzugsanlage 40 beinhaltet eine Aufzugskabine 41, ein Gegengewicht 42 und ein Tragmittel 1 sowie eine Treibscheibe 43 mit zugeordnetem Antriebsmotor 44. Die Treibscheibe 43 treibt das Tragmittel 1 an und bewegt damit die Aufzugskabine 41 und das Gegengewicht 42 gegengleich. Der Antriebsmotor 44 ist von einer Aufzugssteuerung 45 gesteuert. Die Kabine 41 ist gestaltet, um Personen und/oder Güter aufzunehmen und zwischen Etagen eines Gebäudes zu transportieren. Kabine 41 und Gegengewicht 42 sind entlang von Führungen geführt (nicht dargestellt). Im Beispiel sind die Kabine 41 und das Gegengewicht 42 jeweils an Tragrollen 46 aufgehängt. Das Tragmittel 1 ist dabei an einer ersten Tragmittelbefestigungsvorrichtung 47 festgemacht, und dann zunächst um die Tragrolle 46 des Gegengewichts 42 geführt. Sodann ist das Tragmittel 1 über die Treibscheibe 43 gelegt, um die Tragrolle 46 der Kabine 41geführt und schliesslich durch eine zweite Tragmittelbefestigungsvorrichtung 47 mit einem Fixpunkt verbunden. Dies bedeutet, dass das Tragmittel 1 mit einer entsprechend einem Umhängefaktor höheren Geschwindigkeit über den Antrieb 43, 44 läuft, als sich Kabine 41 bzw. Gegengewicht 42 bewegen. Im Beispiel beträgt der Umhängefaktor 2:1.

Ein loses Ende 1.1 des Tragmittels 1 ist mit einer Kontaktierungsvorrichtung 2 zur temporären oder permanenten Kontaktierung des Tragmittels 1 versehen. Im dargestellten Beispiel ist an beiden Enden des Tragmittels 1 eine derartige Kontaktierungsvorrichtung 2 angeordnet. In einer alternativen nicht dargestellten Ausführungsform ist nur eine Kontaktierungsvorrichtung 2 an einem der Tragmittelenden 1.1 angeordnet. Die Tragmittelenden 1.1 sind von der Zugkraft im Tragmittel 1 nicht mehr belastet, da diese Zugkraft bereits vorgängig über die Tragmittelbefestigungen 47 in das Gebäude geleitet ist.
Die Kontaktierungsvorrichtungen 2 sind also in einem nicht überrollten Bereich des Tragmittels 1 angeordnet.

Die gezeigte Aufzugsanlage 40 in Figur 1 ist beispielhaft. Andere Umhängefaktoren und Anordnungen, wie beispielsweise Aufzugsanlagen ohne Gegengewicht, sind möglich. Die Kontaktierungsvorrichtung 2 zur Kontaktierung des Tragmittels 1 wird dann entsprechend der Platzierung der Tragmittelbefestigungen 47 angeordnet.

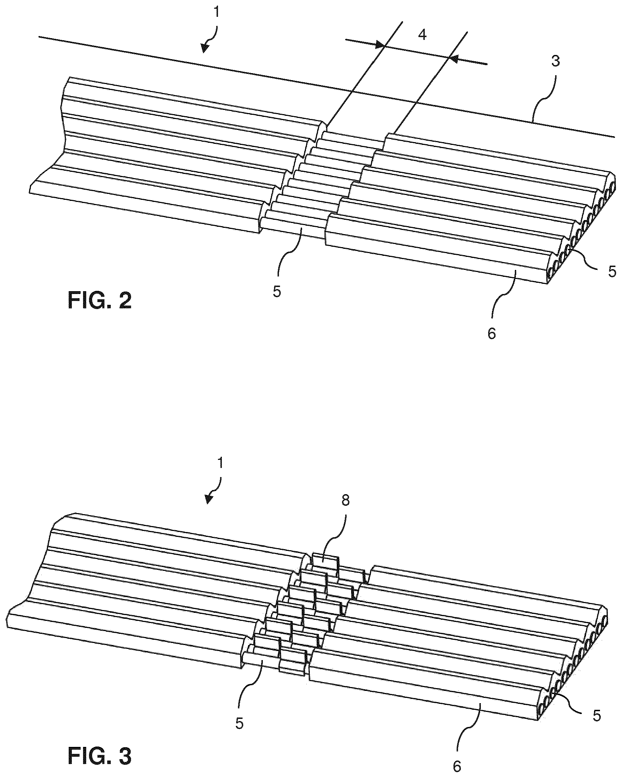

In Figur 2 ist eine beispielhafte Ausführungsform eines Tragmittels 1 mit Zugträgern 5 und einem umhüllenden Mantel 6 dargestellt. Dabei sind die Zugträger 5 entlang einer Längsachse 3 des Tragmittels 1 angeordnet. Auf einem Abschnitt 4 der Längsachse 3 des Tragmittels sind die Zugträger 5 vom Mantel 6 freigelegt. Das in diesem Beispiel dargestellte Tragmittel weist auf einer Traktionsseite Längsrippen auf. In einem alternativen, nicht dargestellten Ausführungsbeispiel weist das Tragmittel keine Längsrippen auf.

Das Freilegen der Zugträger 5 auf dem Abschnitt 4 kann beispielsweise durch bürsten und oder wasserstrahlschneiden erfolgen. In einer beispielhaften Ausführungsform wird zuerst eine Seite des Mantels 6 bis zu den Zugträgern 5 weggebürstet. Sodann wird eine zweite Seite ebenfalls bis zu den Zugträgern 5 weggebürstet. Anschliessend wird der verbleibende Mantel 6 auf dem Abschnitt 4 durch wasserstrahlschneiden weggeschnitten. Das wasserstrahlschneiden erfolgt vorzugsweise in axialer Richtung zur Längsachse 3 des Tragmittels 1 und parallel zu den Zugträgern 5. Dabei kann ein Durchmesser des Wasserstrahls beispielsweise zwischen 0,3 und 0,7 mm liegen. Um die Zugträger 5 komplett vom Mantel 6 freizulegen, kann nach dem wasserstrahlschneiden nochmals ein Bürstvorgang vorgesehen werden. Ein solcher nachgelagerter Bürstvorgang stellt sicher, dass der Mantel 6 auf dem Abschnitt 4 komplett entfernt wird. Eine komplette Entfernung des Mantels 5 auf dem Abschnitt 4 ist wichtig für eine sichere elektrische Kontaktierung der Zugträger 5 durch die Kontaktelemente 8.

In Figur 3 ist dasselbe Tragmittel 1 wie in Figur 2 dargestellt. Hier sind auf dem freigelegten Abschnitt 4 Kontaktelemente 8 an den Zugträgern 5 befestigt. In diesem Ausführungsbeispiel sind die Kontaktelemente 8 versetzt zueinander in Bezug zur Längsachse 3 des Tragmittels 1 angeordnet. Dadurch wird verhindert, dass sich benachbarte Kontaktelemente 8 berühren und dadurch eine elektrische Brücke zwischen benachbarten Zugträgern 5 bilden.

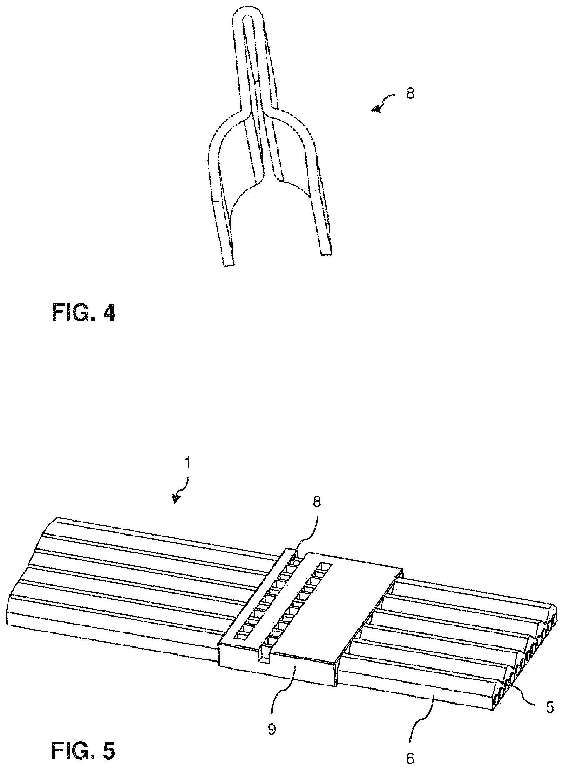

In Figur 4 ist ein beispielhaftes Kontaktelement 8 dargestellt. Das Kontaktelement 8 kann aus einer verzinkten Stahlplatte gebildet sein, welche entsprechend gebogen wird. Die gebogenen Schenkel des Kontaktelementes 8 dienen einer Umklammerung der Zugträger 5 zur Herstellung eines sicheren elektrischen Kontaktes zwischen den Kontaktelementen 8 und den Zugträgern 5. Das Kontaktelement 8 kann beispielsweise an zwei bis vier Punkten mit einem Laser punktverschweisst werden mit einem Zugträger 5.

In Figur 5 ist dasselbe Tragmittel 1 wie in Figur 3 dargestellt, hier ist jedoch über dem freigelegten Abschnitt 4 ein Abdeckelement 9 angeordnet. Dieses Abdeckelement 9 kann beispielsweise aus Polyamid, bevorzugt faserverstärktes Polyamid, ausgebildet sein. Das Abdeckelement 9 lässt die Kontaktelemente 8 soweit frei, dass diese auf einfache Art und Weise von einem Stecker kontaktiert werden können. Gleichzeitig schützt das Abdeckelement 9 die Kontaktelemente 8 vor mechanischen Einflüssen und schützt auch die freigelegten Zugträger 5 vor Umwelteinflüssen.

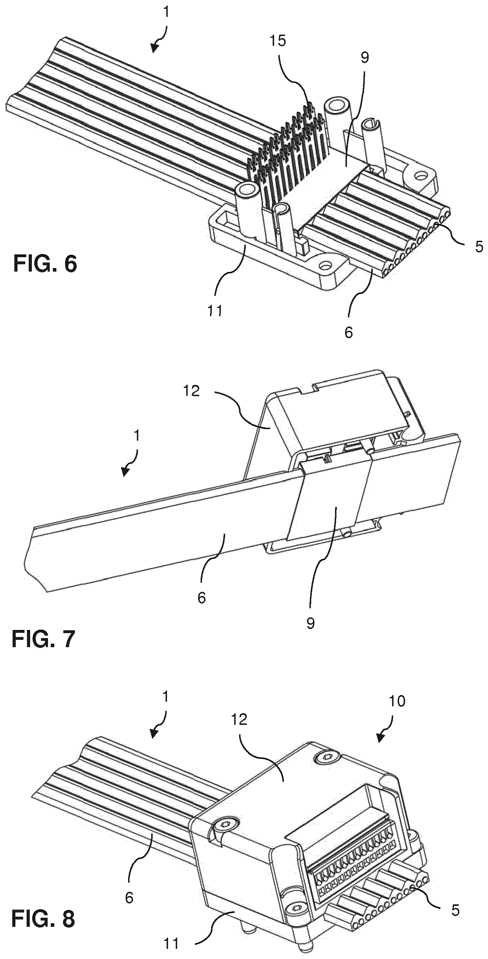

In den Figuren 6, 7 und 8 ist ein beispielhaftes Tragmittel 1 mit Kontaktelementen 8 und mit einem Stecker 10 dargestellt. Dabei zeigt Figur 8 den vollständigen Stecker 10, Figur 6 zeigt lediglich einen Sockel 11 des Steckers 10, und Figur 7 zeigt lediglich einen Deckel 12 des Steckers 10. Um die Kontaktelemente 8 zuverlässig elektrisch abgreifen zu können, sind Verbindungselemente 15 vorgesehen. Bei einem Anschliessen des Steckers 10 an die Kontaktelemente 8 kann beispielsweise zunächst das Tragmittel 1 in den Sockel 11 gelegt werden. Dabei ist das Tragmittel 1 sowohl in Richtung der Zugträger 5 als auch quer zur Richtung der Zugträger 5 in engen Grenzen beweglich im Sockel 11 gelagert. Wird nun der Deckel 12 mit den Verbindungselementen 15 auf dem Sockel 11 befestigt, so richtet sich das Tragmittel 1 entsprechend im Sockel 11 aus, während dessen die Verbindungselemente 15 mit den Kontaktelementen 8 in vorgesehener Art und Weise in Kontakt treten (in Figur 6 sind die Verbindungselemente 15 zur besseren Veranschaulichung ohne Deckel 12 dargestellt). Nachdem das Tragmittel 1 im Sockel 11 entsprechend ausgerichtet ist und die Verbindungselemente 15 in vorgesehener Art und Weise mit den Kontaktelementen 8 in Kontakt stehen, wird der Deckel 12 mit dem Sockel 11 verschraubt. Der fertig an das Tragmittel 1 angebrachte Stecker 10 schützt den freigelegten Tragmittelabschnitt 4 und greift die Kontaktelemente 8 elektrisch ab. Der Stecker 10 kann sodann mit einer Überwachungseinheit (nicht dargestellt) elektrisch verbunden werden.

Der in den Figuren 6 bis 8 dargestellte Stecker 10 bildet zusammen mit den Kontaktelementen 8 eine beispielhafte Kontaktierungsvorrichtung 2, wie sie in Figur 1 schematisch dargestellt ist.

## Patentansprüche

1. Tragmittel (1) für Aufzugsanlagen, das Tragmittel (1) umfassend mehrere parallel zueinander angeordnete Zugträger (5) und einen Mantel (6), wobei die Zugträger (5) vom Mantel (6) umhüllt sind, und wobei sich die Zugträger (5) entlang einer Längsachse (3) des Tragmittels (1) erstrecken, wobei die Zugträger (5) auf einem Abschnitt (4) der Längsachse (3) des Tragmittels (1) zumindest teilweise vom Mantel (6) freiliegen,
**dadurch gekennzeichnet, dass** an den Zugträgern (5) auf diesem Abschnitt (4) Kontaktelemente (8) zu einer elektrischen Kontaktierung der Zugträger (5) permanent befestigt sind.

2. Tragmittel (1) gemäss Anspruch 1, wobei die Kontaktelemente (8) auf die Zugträger (5) gelötet, geschweisst, geklebt oder durch eine mechanische Einwirkung bleibend verformt und dadurch an die Zugträger (5) befestigt sind.

3. Tragmittel (1) gemäss einem der vorhergehenden Ansprüche, wobei die Kontaktelemente (8) im Wesentlichen senkrecht zur Längsachse (3) des Tragmittels (1) und / oder im Wesentlichen senkrecht zu einer Traktionsseite des Tragmittels (1) wegragen.

4. Tragmittel (1) gemäss einem der vorhergehenden Ansprüche, wobei an jedem Zugträger (5) des Tragmittels (1) zumindest ein Kontaktelement (8) angeordnet ist.

5. Tragmittel (1) gemäss einem der vorhergehenden Ansprüche, wobei benachbarte Kontaktelemente (8) in Bezug zur Längsachse (3) des Tragmittels (1) versetzt zueinander angeordnet sind.

6. Tragmittel (1) gemäss einem der vorhergehenden Ansprüche, wobei ein Abdeckelement (9) über die Zugträger (5) auf dem Abschnitt (4) angeordnet ist, so dass im Wesentlichen nur Stellen der Zugträger (5) vom Abdeckelement (9) freiliegen, an welchen die Kontaktelemente (8) angeordnet sind.

7. Tragmittel (1) gemäss einem der vorhergehenden Ansprüche, wobei der Abschnitt (4) 5 bis 100 mm, bevorzugt 5 bis 50 mm, besonders bevorzugt 5 bis 25 mm misst in Richtung der Längsachse (3) des Tragmittels (1).

8. Aufzugsanlage (40) mit einem Tragmittel (1) gemäss einem der Ansprüche 1 bis 7.

9. Verfahren zur Überwachung eines Zustandes von Zugträger (5) in einem Tragmittel (1), wobei das Tragmittel (1) mehrere parallel zueinander angeordnete Zugträger (5) umfasst und einen Mantel (6) aufweist, wobei die Zugträger (5) vom Mantel (6) umhüllt sind, das Verfahren umfassend die Schritte:
zumindest teilweises Freilegen der Zugträger (5) auf einem Abschnitt (4) des Tragmittels (1);
permanentes Befestigen von Kontaktelementen (8) an den Zugträgern (5) auf dem
freigelegten Abschnitt (4) des Tragmittels (1) zur elektrischen Kontaktierung der Zugträger (5);
Einbauen des Tragmittels (1) in eine Aufzugsanlage (40);
Verbinden der Kontaktelemente (8) mit einer Überwachungseinheit;
Bestimmen einer elektrischen Kenngrösse der Zugträger (5) zur Überwachung des Zustandes der Zugträger (5).

10. Verfahren nach Anspruch 9, wobei beim Freilegen der Zugträger (5) der Mantel (6) auf dem Abschnitt (4) gebürstet wird und / oder wasserstrahlgeschnitten wird und / oder geschmolzen wird und / oder durch einen Laser entfernt wird und / oder dass ein Abschnitt des Mantels (6) zumindest teilweise von den Zugträgern (5) abgezogen wird.

11. Verfahren nach einem der Ansprüche 9 oder 10, wobei der Mantel (6) auf dem
Abschnitt (4) zunächst gebürstet, dann wasserstrahlgeschnitten, und dann nochmals gebürstet wird.

12. Verfahren nach einem der Ansprüche 9 bis 11, wobei die Kontaktelemente (8) an die Zugträger (5) gelötet, geschweisst, geklebt oder durch eine mechanische Einwirkung bleibend verformt und dadurch an die Zugträger (5) befestigt werden.

13. Verfahren nach einem der Ansprüche 9 bis 12, wobei vor oder nach dem Befestigen der Kontaktelemente (8) an den Zugträgern (5) ein Abdeckelement (9) über den Zugträgern (5) angeordnet wird, so dass im Wesentlichen nur Stellen der
Zugträger (5) freiliegen, an welchen die Kontaktelemente (8) angeordnet sind.

14. Stecker (10) zum elektrischen Abgreifen eines Tragmittels (1) nach einem der Ansprüche 1 bis 7,
**dadurch gekennzeichnet, dass**
der Stecker (10) umfassend einen Sockel (11) und einen Deckel (12), wobei das Tragmittel (1) mit den Kontaktelementen (8) im Sockel (11) derart angeordnet werden kann, dass das Tragmittel (1) sowohl in Richtung der Zugträgern (5) als auch quer zur Richtung der Zugträger (5) beweglich im Sockel (11) gelagert ist, und
wobei der Deckel (12) Verbindungselemente (15) aufweist und derart auf dem Sockel (11) angeordnet werden kann, dass sich das Tragmittel (1) im Sockel (11) ausrichten kann, während dessen die Verbindungselemente (15) mit den Kontaktelementen (8) in vorgesehener Art und Weise in Kontakt treten, und
wobei Deckel (12) und Sockel (11) derart aneinander befestigt werden können, dass die Verbindungselemente (15) in Bezug zu den Kontaktelementen (8) in ihrer vorgesehenen Position gehalten sind.

## Claims

1. Support means (1) for lift installations, the support means (1) comprising a plurality of tensile carriers (5) arranged parallel to one another and a casing (6), wherein the tensile carriers (5) are enclosed by the casing (6) and wherein the tensile carriers (5) extend along a longitudinal axis (3) of the support means (1), wherein the tensile carriers (5) are freed at least partly from the casting (6) on a section (4) on the longitudinal axis (3) of the support means (1),
**characterised in that** contact elements (8) for electrical contacting of the tensile carriers (5) are permanently fastened to the tensile carriers (5) on this section (4).

2. Support means (1) according to claim 1, wherein the contact elements (8) are soldered, welded or glued to the tensile carriers (5) or permanently deformed by a mechanical action and thereby fastened to the tensile carriers (5).

3. Support means (1) according to one of the preceding claims, wherein the contact elements (8) project away substantially perpendicularly to the longitudinal axis (3) of the support means (1) and/or substantially perpendicularly to a traction side of the support means (1).

4. Support means (1) according to any one of the preceding claims, wherein at least one contact element (8) is arranged at each tensile carrier (5) of the support means (1).

5. Support means (1) according to any one of the preceding claims, wherein adjacent contact elements (8) are arranged offset relative to one another with respect to the longitudinal axis (3) of the support means (1).

6. Support means (1) according to any one of the preceding claims, wherein a cover element (9) is arranged over the tensile carriers (5) at the section (4) so that substantially only locations of the tensile carriers (5) at which the contact elements (8) are arranged are freed from the cover element (9).

7. Support means (1) according to any one of the preceding claims, wherein the section (4) measures 5 to 100 millimetres, preferably 5 to 50 millimetres, particularly preferably 5 to 25 millimetres, in the direction of the longitudinal axis (3) of the support means (1).

8. Lift installation (40) with a support means (1) according to any one of claims 1 to 7.

9. Method of monitoring a state of tensile carriers (5) in a support means (1), wherein the support means (1) comprises a plurality of tensile carriers (5) arranged parallel to one another and a casing (6), wherein the tensile carriers (5) are enclosed by the casing (6), the method comprising the steps of:
at least partly freeing the tensile carriers (5) on a section (4) of the support means (1);
permanently fastening contact elements (8) to the tensile carriers (5) on the freed section (4) of the support means (1) for electrical contacting of the tensile carriers (5);
installing the support means (1) in a lift installation (40);
connecting the contact elements (8) with a monitoring unit; and
determining an electrical characteristic value of the tensile carriers (5) for monitoring the state of the tensile carriers (5).

10. Method according to claim 9, wherein for the freeing of the tensile carriers (5) the casing (6) is brushed at the section (4) and/or cut by water jet and/or melted and/or removed by laser and/or a section of the casing (6) is at least partly pulled off the tensile carriers (5).

11. Method according to one of claims 9 and 10, wherein the casing (6) is initially brushed on the section (4), then cut by water jet and then brushed again.

12. Method according to any one of claims 9 to 11, wherein the contact elements (8) are soldered, welded or glued to the tensile carriers (5) or permanently deformed by a mechanical action and thereby fastened to the tensile carriers (5).

13. Method according to any one of claims 9 to 12, wherein before or after fastening of the contact elements (8) to the tensile carriers (5) a cover element (9) is arranged over the tensile carriers (5) so that substantially only locations of the tensile carriers (5) at which the contact elements (8) are arranged are freed.

14. Plug (10) for electrical tapping of a support means (1) according to any one of claims 1 to 7,
**characterised in that**
the plug (10) comprises a base (11) and a cover (12), wherein the support means (1) with the contact elements (8) can be so arranged in the base (11) that the support means (1) is mounted in the base (11) to be movable not only in the direction of the tensile carriers (5), but also transversely to the direction of the tensile carriers (5),
wherein the cover (12) comprises connecting elements (15) and can be so arranged on the base (11) that the support means (1) can align itself in the base (11), during which the connecting elements (15) come into contact with the contact elements (8) in intended mode and manner, and
wherein the cover (12) and base (11) can be so fastened to one another that the connecting elements (15) are held in the intended position thereof with respect to the contact elements (8).

## Revendications

1. Moyen de support (1) pour installations d'ascenseur, le moyen de support (1) comprenant plusieurs éléments de traction (5), disposés parallèlement les uns aux autres, et une gaine (6), les éléments de traction (5) étant enrobés par la gaine (6) et les éléments de traction (5) s'étendant le long d'un axe longitudinal (3) du moyen de support (1), les éléments de traction (5) étant au moins en partie dégagés de la gaine (6) sur une section (4) de l'axe longitudinal (3) du moyen de support (1),
**caractérisé en ce que** des éléments de contact (8) sont fixés de manière permanente aux éléments de traction (5) sur cette section (4), en vue d'une connexion électrique des éléments de traction (5).

2. Moyen de support (1) selon la revendication 1, les éléments de contact (8) étant brasés, soudés, collés sur les éléments de traction (5) ou déformés de manière permanente par une action mécanique et fixés ainsi aux éléments de traction (5).

3. Moyen de support (1) selon l'une des revendications précédentes, les éléments de contact (8) dépassant globalement perpendiculairement à l'axe longitudinal (3) du moyen de support (1) et/ou globalement perpendiculairement à un côté traction du moyen de support (1).

4. Moyen de support (1) selon l'une des revendications précédentes, au moins un élément de contact (8) étant disposé sur chaque élément de traction (5) du moyen de support (1).

5. Moyen de support (1) selon l'une des revendications précédentes, des éléments de contact (8) voisins étant décalés les uns par rapport aux autres, par rapport à l'axe longitudinal (3) du moyen de support (1).

6. Moyen de support (1) selon l'une des revendications précédentes, un élément de recouvrement (9) étant disposé par-dessus les éléments de traction, sur la section (4), de sorte que pratiquement seuls les endroits des éléments de traction (5) au niveau desquels sont disposés les éléments de contact (8) sont dégagés de l'élément de recouvrement (9).

7. Moyen de support (1) selon l'une des revendications précédentes, la section (4) mesurant 5 à 100 mm, de préférence 5 à 50 mm, plus spécialement 5 à 25 mm dans le sens de l'axe longitudinal (3) du moyen de support (1).

8. Installation d'ascenseur (40) avec un moyen de support (1) selon l'une des revendications 1 à 7.

9. Procédé pour surveiller un état d'éléments de traction (5) dans un moyen de support (1), le moyen de support (1) comprenant plusieurs éléments de traction (5), disposés parallèlement les uns aux autres, et une gaine (6), les éléments de traction (5) étant enrobés par la gaine (6), le procédé comprenant les étapes suivantes :
dégagement au moins partiel des éléments de traction (5) sur une section (4) du moyen de support (1) ;
fixation permanente d'éléments de contact (8) aux éléments de traction (5) sur la section dégagée (4) du moyen de support (1), en vue d'une connexion électrique des éléments de traction (5) ;
montage du moyen de support (1) dans une installation d'ascenseur (40) ;
raccordement des éléments de contact (8) à une unité de surveillance ;
définition d'une caractéristique électrique des éléments de traction (5) pour surveiller l'état des éléments de traction (5).

10. Procédé selon la revendication 9, selon lequel lors du dégagement des éléments de traction (5), la gaine (6), sur la section (4), est brossée et/ou coupée au jet d'eau et/ou fondue et/ou supprimée à l'aide d'un laser et/ou une section de la gaine (6) est au moins en partie retirée des éléments de traction (5).

11. Procédé selon l'une des revendications 9 à 10, selon lequel la gaine (6), sur la section (4), est tout d'abord brossée, puis coupée au jet d'eau, puis à nouveau brossée.

12. Procédé selon l'une des revendications 9 à 11, selon lequel les éléments de contact (8) sont brasés, soudés, collés aux éléments de traction (5) ou déformés de manière permanente par une action mécanique et fixés ainsi aux éléments de traction (5).

13. Procédé selon l'une des revendications 9 à 12, selon lequel avant ou après la fixation des éléments de contact (8) aux éléments de traction (5), un élément de recouvrement (9) est disposé par-dessus les éléments de traction de sorte que pratiquement seuls les endroits au niveau desquels sont disposés les éléments de contact (8) sont dégagés.

14. Connecteur (10) pour la mesure électrique d'un moyen de support (1) selon l'une des revendications 1 à 7,
**caractérisé en ce que** le connecteur (10) comprend un socle (11) et un couvercle (12), le moyen de support (1) avec les éléments de contact (8) pouvant être disposé dans le socle (11) de telle sorte que ledit moyen de support (1) soit monté dans le socle (11) en étant mobile aussi bien dans le sens des éléments de traction (5) que transversalement par rapport au sens des éléments de traction (5), et
le couvercle (12) comportant des éléments de raccordement (15) et pouvant être disposé sur le socle (11) de telle sorte que le moyen de support (1) puisse s'aligner dans ledit socle (11), tandis que les éléments de raccordement (15) viennent en contact avec les éléments de contact (8) d'une manière prévue, et
le couvercle (12) et le socle (11) pouvant être fixés l'un à l'autre de telle sorte que les éléments de raccordement (15) soient maintenus par rapport aux éléments de contact (8) dans leur position prévue.
